# EUROPEAN PATENT APPLICATION

(11) **EP 4 195 579 A1**
(43) Date of publication of application: **14.06.2023**
(21) Application number: 21306724.2
(22) Date of filing: 07.12.2021
(51) Int. Cl.: H04L 9/00, G06F 21/00

(54) **ASYNCHRONOUS CODE EXECUTION FOR ENHANCED PERFORMANCE AND SECURITY MEASURES PROTECTING DIGITAL SECURITY DEVICES**

(71) Applicant: Thales Dis France SAS, 92190 Meudon (FR)
(72) Inventor: LEPAVEC, Emmanuel, 92190 Meudon (FR); MINETTE DE SAINT-MARTIN, Xavier, 92190 Meudon (FR); BOUVERON, Dominique, 92190 Meudon (FR)
(74) Representative: Bricks, Amélie

(57) **Abstract**

Enhanced performance while protecting a computerized digital security device against side-channel, fault injection, and timing attacks, the method comprising:
identifying asynchronous tasks to be performed by the computerized digital security device by placing identified asynchronous tasks in an asynchronous task queue; and
executing a first application, including nonlinearizing execution of the application by selecting at least one task from the asynchronous task queue, executing the selected at least one task, removing the selected at least one task from the asynchronous task queue.

## Description

### BACKGROUND OF THE INVENTION

The present invention relates, generally, to digital security devices, and, more particularly, to countermeasures protecting digital security devices against side-channel, fault injection, and timing attacks.

Electronic communication and commerce can be powerful, yet dangerous tools. With the wide-spread availability of network technology, such as the Internet, there is an ever-increasing use of online tools for communication and commerce. Every year more users find it easier or quicker to conduct important transactions, whether in the form of correspondence or commerce, using computers and computer networks.

Furthermore, digital technology is playing an ever-increasing role in identity management, e.g., digital identity cards and passports.

Such digital security technologies may involve any of a large variety of software and hardware techniques, for example, cryptography, anti-virus software, and biometrics. These digital security technologies may be deployed on many types of *digital security devices,* e.g., smart cards, USB tokens with embedded smart cards, subscriber identity modules (SIM) embedded or installed in mobile devices, Internet of Things (loT) devices. Indeed, any computerized device entrusted to protect secrets, e.g., private communications, cryptography keys, account numbers, health information, may be viewed as a digital security device.

However, there is always the risk that the security of operations performed by digital security devices are compromised through interception by third parties who do not have the right to partake in the transactions. When malicious third parties obtain access to otherwise private transactions and data there is risk of economic loss, privacy loss, and even loss of physical safety.

Consider, as an example, cryptography, which is one mechanism employed to avoid intrusion into the privacy of electronic transactions and data. Traditionally, both sender and recipient of a cryptographic message were considered secure. Cryptography's primary use was to transmit an encoded message from the sender to the recipient without fear that an intermediary would be able to decode the message. If an attacker has no access to the sender's or recipient's cryptographic devices, the attacker is limited to using the encoded message itself or possibly an encoded message and a corresponding plaintext message, to discern the cryptographic key used to encode or decode the message. However, if the attacker has access to the cryptographic device, the picture changes dramatically as the attacker can in that case also analyze artifacts, so called side-channel data, such as power consumption, to deduce data manipulated by the cryptographic device.

One mechanism of ensuring that a private key is indeed kept private is to store the private key and any related key material on a secure portable device, e.g., a smart card or a mobile device. A smart card is a small tamper resistant computer often in the form of a credit card sized and shaped package. Smart cards may be used to store cryptographic keys and cryptography engines for performing encryption, decryption, and digital signatures.

In one example, a user may receive an encrypted message and uses his smart card to decrypt the message by first authenticating to the smart card and then passing the message to the smart card for decryption. If authentication is successful, the smart card may use a cryptographic key stored on the card, and a corresponding cryptography engine, to decrypt the message and provide the decrypted message to the user. Similarly, if a user wishes to cryptographically sign a message, the user may pass the message to the user's smart card, which uses a cryptographic key of the user to digitally sign the message and to provide the signature back to the user or to a third-party recipient.

While cryptography mechanisms are extremely difficult, if not impossible, to break from an algorithmic perspective, the implementation of cryptography mechanisms on the electronics of digital security devices may render them much less secure than an algorithmic analysis would suggest. If an attacker has access to the smart card, the attacker may make repeated observations of, for example, power consumption or electromagnetic emission, during the execution of the cryptographic algorithms and use such ancillary information in attempts to discern the secrets stored on the smart card, specifically secret cryptographic keys stored on the smart card. One such attack is the so-called side-channel attack.

Side-channel attacks make use of the program timing, power consumption and/or the electronic emanation of a device that performs a cryptographic computation. The behavior of the device (timing, power consumption and electronic emanation) varies and depends directly on the program and on the data manipulated in the cryptographic algorithm. An attacker could take advantage of these variations to infer sensitive data leading to the recovery of a private key.

In parallel to the development of side-channel analysis attacks, techniques have been developed to protect against attempts to recover keys, or other sensitive information, from side-channel leakages. These techniques, known as *countermeasures,* include attempts to hide the operations of the cryptography device from any side-channel data leakage, for example, by masking the data while being manipulated by cryptographic algorithms, by introducing dummy instructions, altering order of instructions, or manipulating the system clock to introduce jitters in any collected side-channel data.

There are several different types of side-channel attacks and, conversely, several different types of countermeasures. With respect to side-channel attacks based on electrical activity of a device, Mark Randolph and William Diehl, Power Side-Channel Attack Analysis: A Review of 20 Years of Study for the Layman, Cryptography 2020, 4, 15; doi:10.3390/cryptography4020015 (incorporated herein by reference) provides a survey of many of the techniques employed as well as discussion of countermeasures.

One form of attack is based on analysis of execution paths through a security algorithm, e.g., a cryptography algorithm. In essence, an attacker monitors, for example, power consumption or execution time through one path with respect to power consumption or execution time of another path of a sensitive routine to determine which path is being executed in response to a particular input data.

Another form of attack, *fault-injection attack,* seeks to manipulate a device through its behavior when certain faults are induced, for example, by introducing out-of-range supply voltage or clock manipulation. Fault injection may, for example, be used to cause skipping of instructions, incorrect data or instruction fetch, or failure to correctly write data to memory. Success of fault-injection attacks depends on accurate timing of an attack; for example, branch and compare instructions are likely targets to cause execution of a particular branch.

One countermeasure defense against side-channel and fault-injection attacks is to desynchronize the execution of the respective paths through the routine such that any given pass through a portion of code may not result in the same power consumption or timing signature. Such desynchronization may be performed by introducing *dummy* routines that intentionally slow-down a portion of code and thereby desynchronizing sensitive routine execution timings to prevent an attacker from performing fault-injection attacks at a precise time or location. Introducing dummy routines may also cause an unpredictable power usage profile for the execution of a portion of code thereby making side-channel analysis attacks more difficult.

An alternative countermeasure, *uniform branch timing,* pads code execution of sensitive routines such that all possible branches through a sensitive portion have uniform execution times, i.e., regardless of which conditions apply, execution time will be the same.

Both execution desynchronization and uniform branch timing suffer from performance degradation due to execution of unproductive operations intended to either cause unpredictable execution timing or uniform execution of all code branches.

Furthermore, usually desynchronization and padding are implemented in simple and predictable ways, e.g., empty loops or loops that perform simple arithmetic. Such operations may be easily detected through side-channel analysis (e.g., simple power analysis or differential power analysis). Thus, the padding code may in of itself render the sensitive routine vulnerable to attack.

It should be noted that the vulnerability to side-channel analysis is not limited to cryptography operations. There are many other operations by computers that must protect sensitive information, for example, passwords. Thus, side-channel analysis is an issue in such scenarios also.

From the foregoing it is apparent that there is a need for an improved method to protect sensitive routines executed by digital security devices against side-channel and fault-injection attacks through desynchronization and uniform branch execution without wasteful execution of useless code that may be vulnerable to side-channel attack.

### SUMMARY

According to a first aspect, the herein described technology provides a method for enhancing performance while protecting a computerized digital security device against side-channel, fault injection, and timing attacks. The method comprises identifying asynchronous tasks to be performed by the computerized digital security device, placing identified asynchronous tasks in an asynchronous task queue, and executing a first application by nonlinearizing execution of the application by selecting at least one task from the asynchronous task queue, executing the selected at least one task, removing the selected at least one task from the asynchronous task queue.

The method may further include predicting execution time for each identified asynchronous task, and the step of selecting at least one task from the asynchronous task queue comprises basing the selection of the at least one task from the asynchronous task queue on the predicted execution times of tasks in the asynchronous task queue.

The method may further include identifying an execution location at which to add desynchronization time, determining how much desynchronization time to add. The step of selecting at least one task may then include selecting at least one task such that the predicted execution time of the selected at least one task sums to less than the determined desynchronization time to add, and performing at least one dummy task to equal the difference in execution time between the determined desynchronization time to add and the sum of the predicted execution time of the selected at least one task.

The method may further include shuffling execution of the first application by selecting at least one task from the asynchronous task queue and executing the selected at least one task prior to continuing execution of the first application.

The method may further include desynchronizing execution of the first application by modifying execution flow of the first application by selecting at least one task from the asynchronous task queue and executing the selected task prior to continuing execution of the first application.

The method may further include identifying at least a first and a second code branch wherein execution time for the first and second code branch are unequal, and equalizing the execution time for the first and second code branch by selecting at least one task from the asynchronous task queue so that the predicted execution time of the selected at least one task balances the execution time of both code branches.

The method may further include randomly selecting tasks from the asynchronous task queue.

The method may include adding tasks to the asynchronous task queue that include tasks selected from tasks required by the first application, tasks required by an operating system of the computerized digital security device, and tasks required by applications other than the first application.

The tasks added to the asynchronous task queue may include tasks selected from the group computation of a very large prime number, defragmentation of memory, non-volatile memory (NVM) page refresh, NVM erase, NVM write, generation of a small buffer of random numbers using hardware true random number generation, security sensor check, memory integrity verification, code execution flow control, data compression, and data decompression.

In a second aspect, the herein-described technology includes a digital security device having a processor and a memory and that is programmed to perform the above-described method for enhancing performance while protecting a computerized digital security device against side-channel, fault injection, and timing attacks.

In an embodiment, the instructions for nonlinearizing execution of a first application may include instructions to cause the processor to:
predict execution time for each identified asynchronous task; and
select at least one task from the asynchronous task queue, basing the selection of the at least one task from the asynchronous task queue on the predicted execution times of tasks in the asynchronous task queue.

In an embodiment, the instructions for nonlinearizing execution of a first application may include instructions to cause the processor to:
identify an execution location at which to add desynchronization time;
determine how much desynchronization time to add;
and the instructions to select at least one task may comprise instructions to select at least one task such that the predicted execution time of the selected at least one task sums to less than the determined desynchronization time to add; and perform at least one dummy task to equal the difference in execution time between the determined desynchronization time to add and the sum of the predicted execution time of the selected at least one task.

In an embodiment, the instructions for nonlinearizing execution of a first application may include instructions to cause the processor to shuffle execution of the first application by selecting at least one task from the asynchronous task queue and executing the selected at least one task prior to continuing execution of the first application.

In an embodiment, the instructions for nonlinearizing execution of a first application may include instructions to cause the processor to desynchronize execution of the first application by modifying execution flow of the first application by selecting at least one task from the asynchronous task queue and executing the selected task prior to continuing execution of the first application.

In an embodiment, the instructions for nonlinearizing execution of a first application include instructions to cause the processor to:
identify at least a first and a second code branch wherein execution time for the first and second code branch are unequal; and
equalize the execution time for the first and second code branch by selecting at least one task from the asynchronous task queue so that the predicted execution time of the selected at least one task balances the execution time of both code branches.

In an embodiment, the instructions for nonlinearizing execution of a first application include instructions to cause the processor to randomly select tasks from the asynchronous task queue.

In an embodiment, the tasks added to the asynchronous task queue include tasks selected from tasks required by the first application, tasks required by an operating system of the computerized digital security device, and tasks required by applications other than the first application.

In an embodiment, the tasks added to the asynchronous task queue include tasks selected from the group computation of a very large prime number, defragmentation of memory, non-volatile memory (NVM) page refresh, NVM erase, NVM write, generation of a small buffer of random numbers using hardware true random number generation, security sensor check, memory integrity verification, code execution flow control, data compression, and data decompression.

In a further aspect, the herein-described technology includes a non-transitory computer memory storing instructions that may cause a processor of a digital security device to perform the above-described method for enhancing performance while protecting a computerized digital security device against side-channel, fault injection, and timing attacks.

### BRIEF DESCRIPTION OF THE DRAWINGS

FIG. 1 is an illustration of a network in which users operate digital security devices to perform any of a variety of sensitive operations, for example, cryptographic operations.
FIG. 2 is an illustration of equipment that may be used to perform a side-channel analysis and fault-injection attacks.
FIG. 3 is a high-level block diagram of an example of a digital security device.
FIG. 4, which is made up FIGs. 4A and 4B, is a flow-chart illustrating high-level steps in a mechanism according to an embodiment of a countermeasure against side-channel and fault-injection attacks.
FIG. 5 is a sample code section containing three asynchronous tasks.
FIG. 6, which is made up of FIGs. 6A, 6B, and 6C, is a schematic of an asynchronous task queue.
FIG. 7 is a timeline illustrating an execution timeline of an application executing desynchronization.
FIG. 8 is a schematic illustration of the example from FIG. 7 in which the execution timeline is modified according to mechanisms described herein for utilizing asynchronous tasks to perform desynchronization operations.

### DETAILED DESCRIPTION OF THE INVENTION

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In addition, it is to be understood that the location or arrangement of individual elements within each disclosed embodiment may be modified without departing from the spirit and scope of the invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

The following description includes references to various methods executed by a processor of an integrated circuit chip. As is common in the field, there may be phrases herein that indicate these methods or method steps are performed by software instructions or software modules. As a person skilled in the art knows, such descriptions should be taken to mean that a processor, in fact, executes the methods, software instructions, and software modules.

The herein described technology provides a mechanism to protect digital security devices against side-channel attacks and fault injection attacks by desynchronizing execution of sensitive routines in an unpredictable manner by desynchronizing code or padding code through the execution of tasks from a queue of tasks that may be executed asynchronously.

A *sensitive operation* is an operation that processes or uses a piece of *sensitive information* that should be protected from being divulged. Examples of *sensitive information* include private cryptographic keys, account numbers, PIN codes and passwords, biometric information, as well as data transferred in secure memory transfer operations. Cryptography operations are typically sensitive operations. Account access through account number, PIN or password are also sensitive operations as are operations to access or manipulate biometric information.

Herein, an *asynchronous task* is a task, performed by an electronic device, that can be performed without being synchronized to the execution of another task. An asynchronous task may be any task that can be executed before or independently of the current actions of an active application process. For example, an asynchronous task may be an operating system function that is performed by the operating system periodically or based on a particular condition without being a function of an application being executed. Such operations include memory management functions, for example, defragmentation and non-volatile read-and-write memory (NVM) page refresh. Asynchronous tasks also include application program operations. For example, for cryptography applications, these application program operations may include computation of large prime numbers, generation of a buffer of true random numbers using hardware true random number generation (TRNG).

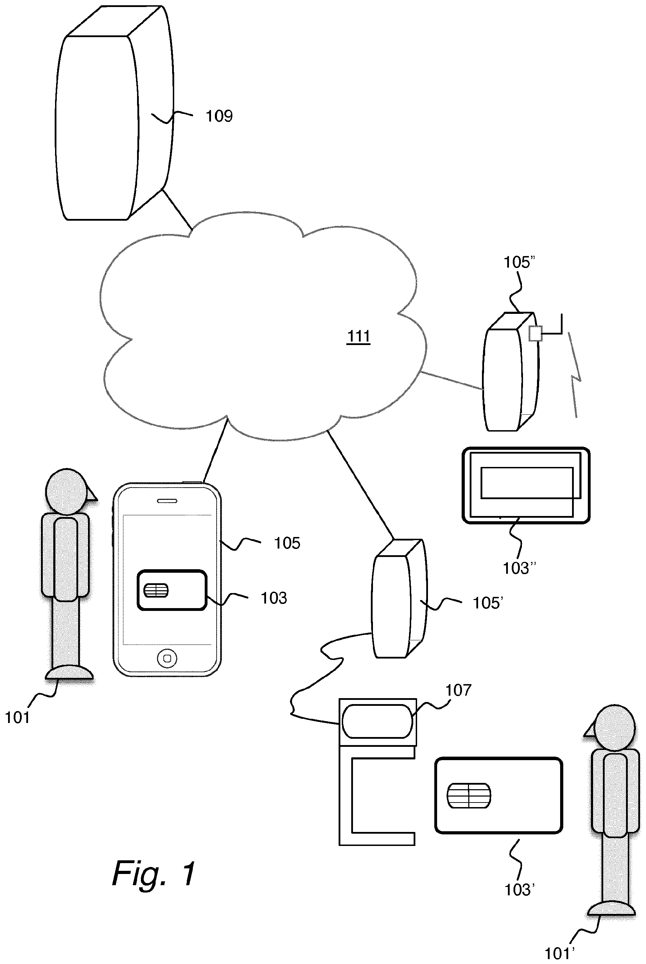

FIG. 1 is an illustration of a network 111 in which users 101 operate digital security devices 103 to perform any of a variety of sensitive operations, for example, cryptographic operations. The digital security devices 103 maybe any of various types of tamper resistant devices such as smart cards, electronic identity cards, passports, and secure USB tokens. A digital security device 103 may be installed in a host device 105, such as a mobile communications device. Alternatively, a digital security device 103' maybe connected via a terminal 107 to a host device 105'. In yet another alternative, a digital security device 103" maybe wirelessly connected to a host device 105", for example, via near-field communication (NFC), Bluetooth, or WiFi.

In many cases, the digital security devices 103 are used to perform cryptographic services in conjunction with a service provided by a service provider 109 over a network 111, e.g., the Internet. Such cryptographic services include providing cryptographic signature, encryption, decryption, and authentication. Alternatively, the digital security devices are used for other operations that involve sensitive information, for example, account access via personal identification number (PIN), password or biometrics.

To perform sensitive operations, for example, cryptographic operations, the digital security device 103 store some sensitive information thereon, e.g., cryptographic keys, PINs or passwords.

In classical cryptography, a sender and recipient of a secret message are each in possession of keys that may be employed to encrypt the message and decrypt the message, respectively. The security of the employed cryptographic algorithm relies on confidence that it is mathematically very difficult to decipher the message without the correct key as well as mathematically very difficult to determine the encryption and decryption keys from a message. Thus, if a message is intercepted en route to a recipient, the intercepting party would not be able to infer either the associated plaintext or the keys used to encrypt and decrypt the message.

That security relies on an assumption that the execution of the algorithm itself will not provide information that may be used to determine the sensitive information used in performing the cryptographic operation, e.g., a decryption operation. If the message is intercepted between sender and intended recipient, that is a safe assumption in the intercepting entity would not have access to the device that is being used to decipher the message.

However, as maybe noted by the examples of FIG. 1, digital security devices 103, e.g., cryptographic devices, may be mobile devices that are somewhat prone being lost or stolen and can thus come into possession by a person who may desire to discern the sensitive information stored on the digital security device 103. In such instances, an entity seeking to determine the sensitive information stored on the digital security device 103 may, in fact, be in possession of the digital security device 103 and may therefore be able to observe the digital security device while it is executing sensitive operations, for example, cryptographic operations.

When a digital security device 103 may be observed while performing sensitive operations, it is possible to measure various physical characteristics of the digital security device 103 that change during the performance of the sensitive operation. For example, the power consumption, electromagnetic radiation, timing information, and even noise of the digital security device 103 maybe recorded and analyzed to determine the sensitive information stored on the digital security device 103. Collectively, such physical characteristics are referred to herein as *side-channel data* and use of such data to determine a sensitive information, e.g., a cryptographic key, as *side-channel analysis.*

In another form of attack, *fault-injection attack,* a digital security device 103 may be subjected to an operational fault condition, e.g., a source voltage out of range or a clocking error, to cause operational errors that an attacker may exploit to cause execution of operations in a manner that may be used by the attacker to discern secret information stored on the digital security device 103.

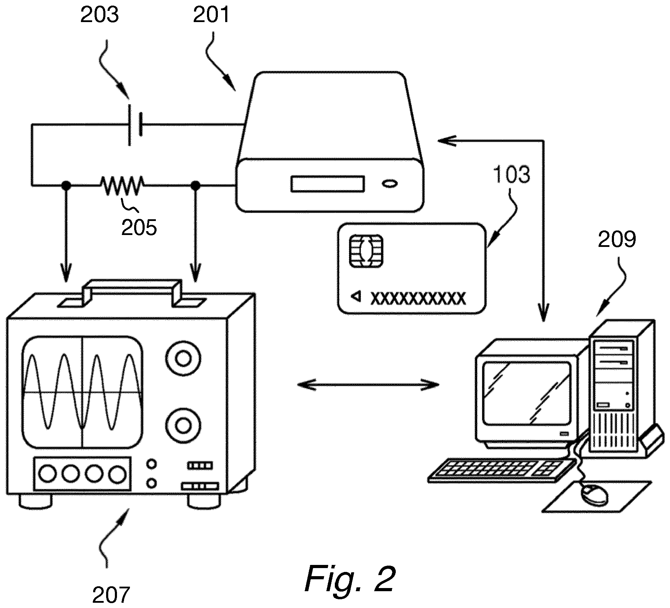

FIG. 2 is an illustration that provides an example of equipment that may be used to perform a side-channel analysis or to perform a fault-injection attack. A digital security device 103 may be inserted into a reader 201. The reader is either connected to or contains an electronic circuit having, for example, a power source 203 that provides power to the security device and a resistor 205. Power consumption of the digital security device 103 may be monitored on a signal acquisition device 207, for example, an oscilloscope, connected in parallel to the resistor 205. A computer 209 is also connected to the reader 201. The computer 209 may be used to change the sensitive information stored on a device under test, i.e., a device that may be manipulated by the attacker, induce the digital security device 103 to perform sensitive operations, e.g., decryption, digital signature, or authentication. The signal acquisition device 207 may also be connected to the computer 209 so that digitized power traces produced by the signal acquisition device 207 may be transferred to the computer 209 for analysis.

The setup of FIG. 2 may also be used to perform a fault-injection attack against a digital security device 103. In such a case, for example, supply voltage applied to the digital security device 103 may be altered at a precise execution time, which may have been identified through side-channel analysis, to cause a particular execution flow.

There are many different types of side-channel attacks. These include, but are not limited to, Simple Power Analysis (SPA), Differential Power Analysis (DPA), Template Attacks (TA), Correlation Power Analysis (CPA), Mutual Information Analysis (MIA), and Test Vector Leakage Assessment (TVLA). Mark Randolph and William Diehl, Power Side-Channel Attack Analysis: A Review of 20 Years of Study for the Layman, Cryptography 2020, 4, 15; doi:10.3390/cryptography4020015. Randolph and Diehl provide a good introduction to the subject of side-channel analysis.

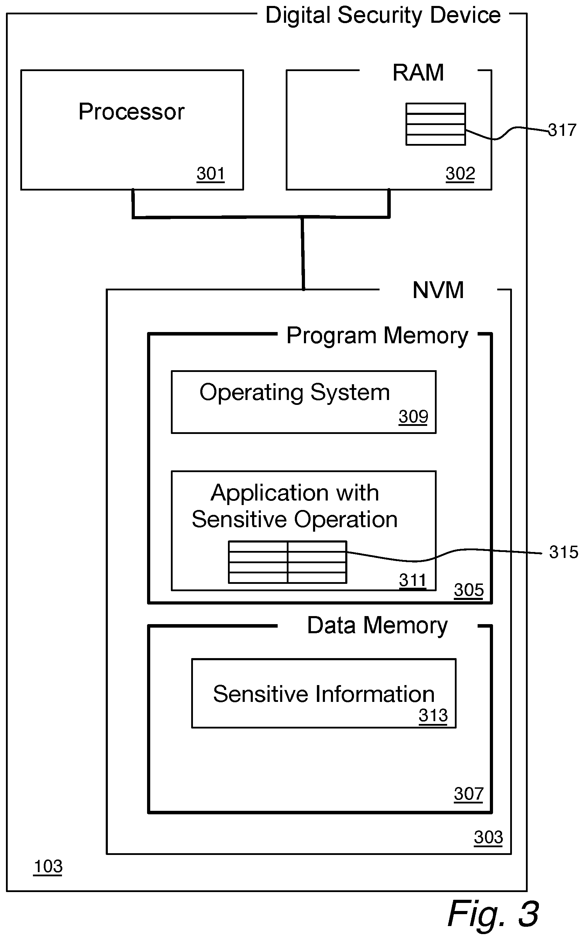

FIG. 3 is a high-level diagram of an example of a digital security device 103, which contains a processor 301, a random access memory (RAM) 302, and a non-volatile memory (NVM) 303, e.g., a non-volatile random-access memory (NVRAM). The NVM 303 may be used to store programs in a program memory 305 and data in a data memory 307. The programs stored in the program memory 305 provide instructions that are executable by the processor 301. The programs may include an operating system 309, e.g., a virtual machine. The programs may also include an application 311 that executes at least one sensitive operation, e.g., a cryptographic operation. The data memory 307 contains sensitive information 313, e.g., cryptographic keys, passwords, and personal identification numbers.

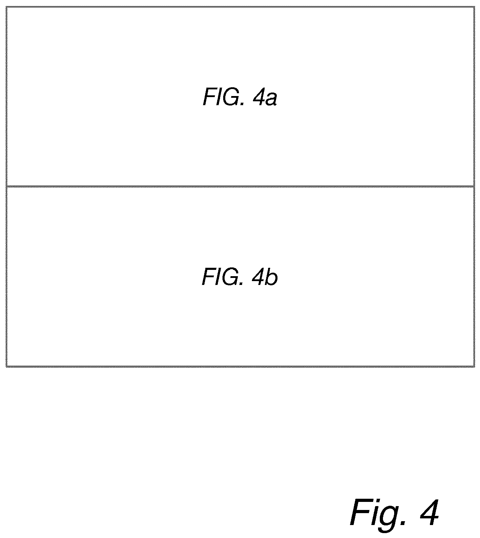

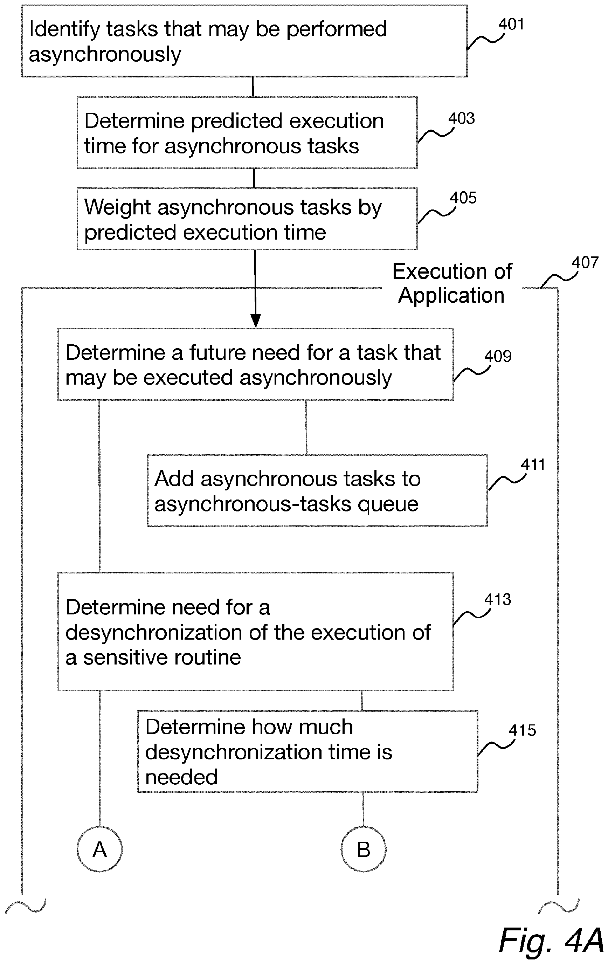

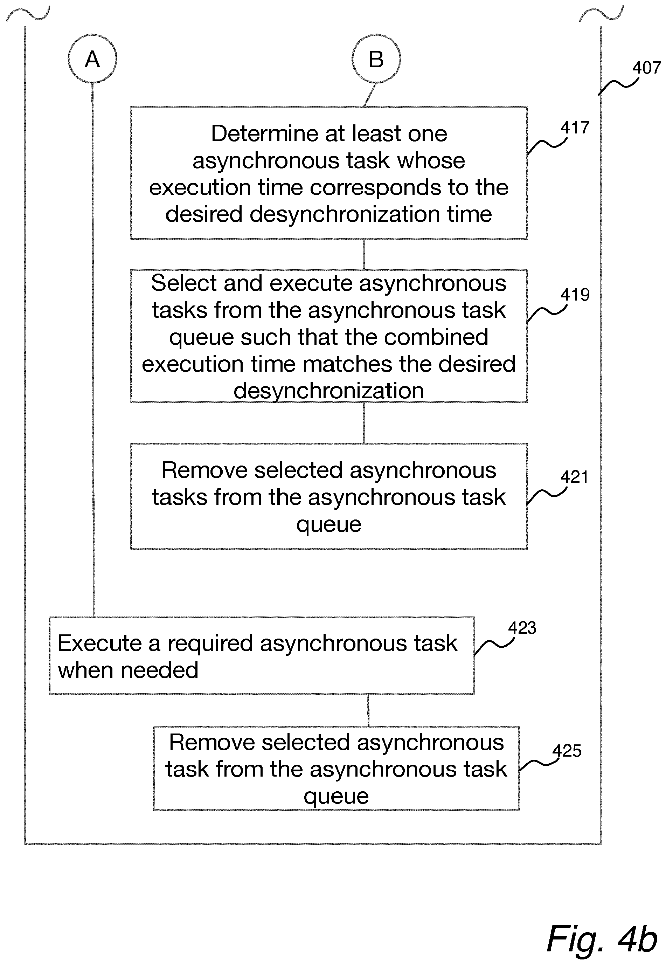

According to an embodiment, the program memory 305 may also contain at least one asynchronous task table 315 for storing information concerning application program tasks that may be performed asynchronously, i.e., to be performed independently of other program flow, and which may be used to disrupt the execution timing of an application to thereby hinder attacks based on analysis of execution timing. The asynchronous task table 315 associated with a particular application 311 is advantageously stored together with the application 311 in the program memory 305. During runtime, the asynchronous task table 315 is used to build a task queue 317 stored in the RAM 302. A task manager function of the operating system 309 uses the task queue 317 to schedule tasks during the execution of the application 311 and other applications executing on the digital security device 103. As discussed in greater detail below, for example, in conjunction with FIG. 4, such asynchronous execution of asynchronous tasks may be used to foil an attack by randomizing execution timing of sensitive routines or to make different branches through sensitive routines uniform.

FIG. 4 is a flow-chart illustrating high-level steps in a mechanism according to an embodiment of a countermeasure against side-channel and fault-injection attacks. The method illustrated in FIG. 4 provides a mechanism that provides defensive desynchronization of operations performed by an application with sensitive operations 311 while avoiding performance of useless operations thereby improving both performance and security of the digital security device 103 with respect to side-channel attacks.

The mechanism illustrated in FIG. 4 may be used as part of counter-measure strategies that involve altering the execution time of different portions of an application. Such countermeasures include *smart desynchronization,* i.e., the randomization of execution timing, and *uniform code branch execution.* In *smart desynchronization,* to avoid revealing to an attacker the location of a particular operation or sequence of operations, the execution time of the operation or sequence of operations is randomized. In *uniform code branch execution,* to avoid revealing which of at least two code branches is being executed, the at least two code branches are made to execute with the same execution time.

In a first step, step 401, tasks are identified as being tasks that may be performed asynchronously. This step may be performed by a code analysis or by a programmer providing comments that flag to a pre-processor that a particular section of code may be performed asynchronously.

Certain tasks may be considered inherently asynchronous. For example, defragmentation of memory. Such tasks may be performed given a particular condition. For example, with respect to memory defragmentation, a memory analysis may reveal a threshold level of fragmentation that would make memory defragmentation desirable, and a second threshold level, would make memory defragmentation necessary before execution of the application may proceed.

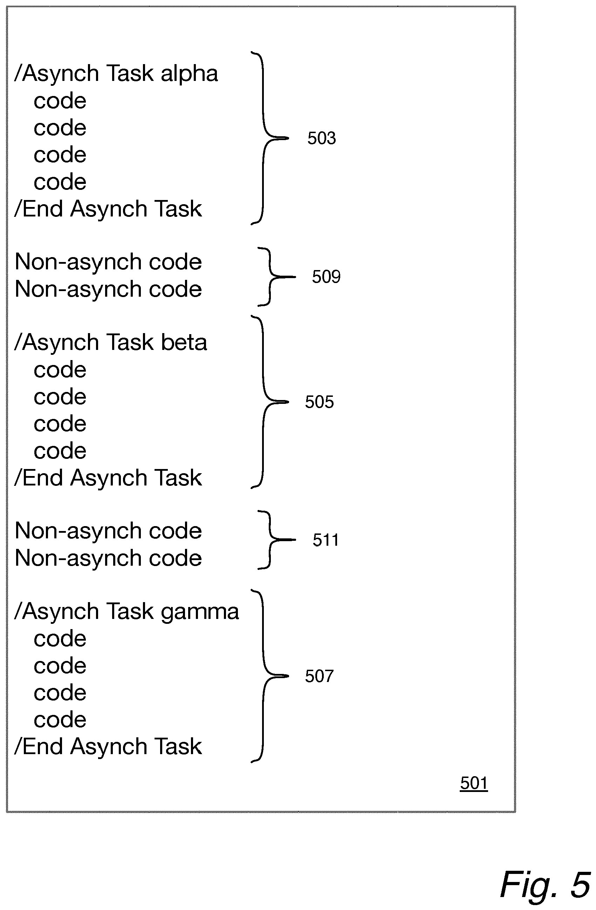

FIG. 5 is a sample code section 501 containing three asynchronous tasks: alpha 503, beta 505, and gamma 507 as well as some non-asynchronous tasks 509 and 511. Whereas the non-asynchronous tasks 509 and 511 must be executed in the correct sequence, the asynchronous tasks 503, 505, and 507 may be executed at any time during execution of an application that the code section 501 belongs to or anytime before the results from such an asynchronous task is needed by the application 501.

A predicted execution time for the task is determined, step 403. In an embodiment, an application developer assigns predicted execution time for the various asynchronous tasks that the developer has identified as component tasks of the application 311. An application developer tool may provide mechanisms for predicting such execution times.

In an embodiment, the predicted execution time is used to assign a weight to the task, step 405. For example, an acceptable range for weights may be 1 through 10. Very quick tasks are given a weight of 1, whereas very complex tasks may be given a weight of 10.

For illustrative purposes, Table 1, provides some example tasks, associated predicted execution time and weights.
- Computation of a very large prime number, 10+ seconds, weight 10
- Defragmentation of memory, 500+ milliseconds, weight 8
- NVRAM page refresh, 10+ milliseconds, weight 5
- Generation of small buffer of random numbers using a hardware true random number generator (TRNG), 5+ milliseconds, weight 3
- Execution of a small computation routine, < 1 millisecond, weight 1

### Table 1: Example asynchronous tasks, predicted execution times, weights

Thus, a relationship is assigned between predicted execution times and weights, e.g., as illustrated in Table 2:

**Table 2: Predicted Execution time to Weight**

| Predicted Execution Time | Weight |
|---|---|
| PET < 1 msec | 1 |
| 1 msec ≤ PET < 3 msec | 2 |
| 3 msec ≤ PET < 6 msec | 3 |
| 6 msec ≤ PET < 10 msec | 4 |
| 9 msec ≤ PET < 20 msec | 5 |
| 20 msec ≤ PET < 50 msec | 6 |
| 50 msec ≤ PET < 100 msec | 7 |
| 100 msec < PET < 1 sec | 8 |
| 1 sec ≤ PET < 10 sec | 9 |
| 10 sec < PET | 10 |

Table 2 is merely one example. In alternative embodiments, the granularity of the association between execution time and weights may be different depending on the implementation.

During the execution 407 of the application, the application forecasts a future need for a task that may be executed asynchronously, step 409, and places such tasks in the task queue 317. The task queue 317 is used by a task scheduler for scheduling tasks to be executed including asynchronous tasks.

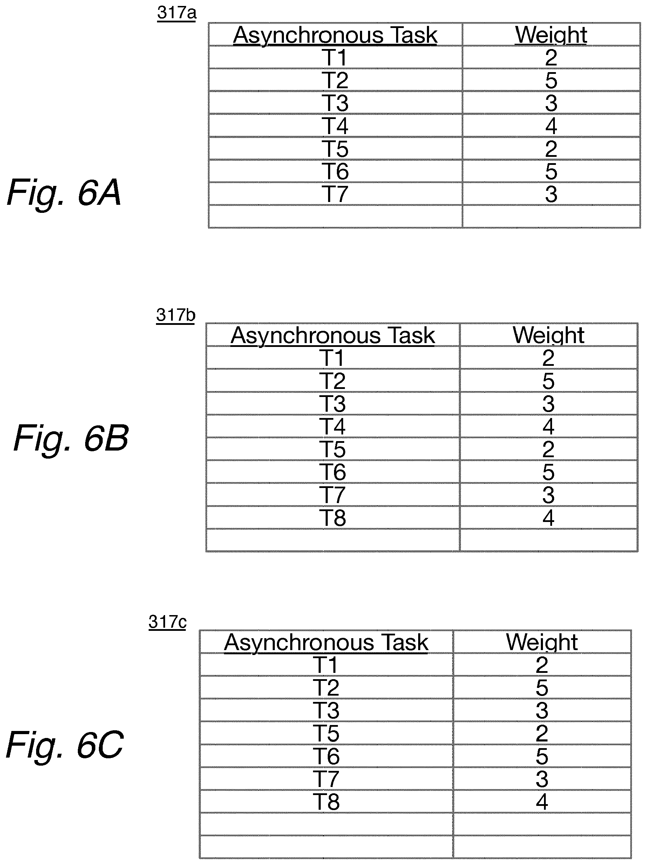

FIG. 6 is an illustration of an asynchronous task queue 317 in greater detail as it is being processed by the steps of FIG. 4. In a first stage, illustrated in FIG. 6A, the asynchronous task queue 317a contains several asynchronous tasks available for execution when needed. In the example, these are tasks T1 through T7. Each of these tasks have a certain predicted execution time, which, in one embodiment may be translated into a weight. Note: 317a, 317b, and 317c are different states of the same asynchronous task queue 317.

If the application has determined that there is a future need for a task that may be executed asynchronously, step 405, that task, e.g., a task T8, it is added 411 to the asynchronous task queue 317b as illustrated in FIG. 6B.

During the execution of the application, the need for a desynchronization may be determined, step 413. The reason for such desynchronization is outside of the scope of this document. However, as noted, adding delays to the execution of sensitive routines may be used to prevent an attacker from performing side-channel, fault-injection, and timing attacks. Furthermore, a countermeasure against timing attacks is based on balancing the execution time of different branches of a sensitive routine. Thus, countermeasures based on such techniques would determine, from time-to-time, the need for introducing desynchronization by executing tasks unrelated or tangentially related to the execution of the sensitive routine being protected.

In a first step of adding desynchronization, a determination is made as to how much execution time should be added at the point that such desynchronization is required, step 415. For example, if one of two branches has an execution time that is a certain amount of time less than the other branch, that difference is the desired desynchronization time. Conversely, if a particular point in code is desynchronized by adding a random amount of time, the added desynchronization time may be set to a random number.

Once the requisite desynchronization time has been determined, one or more tasks with a combined predicted execution time matching the requisite desynchronization time are selected from the asynchronous task queue 317, step 419, and these asynchronous tasks are executed.

The selected tasks are then removed from the asynchronous task queue, step 421. The asynchronous task queue 317c updated after the removal of an executed asynchronous task is illustrated in FIG. 6C, there with the task T4 removed as an example.

From time-to-time the situation may occur that the application requires the execution of task placed on the asynchronous task queue 317 before it has been selected during a desynchronization effort. In such a case, the task is executed based on that its execution is needed by the application, step 423. After such a task has been executed, it is removed from the asynchronous task queue, step 425.

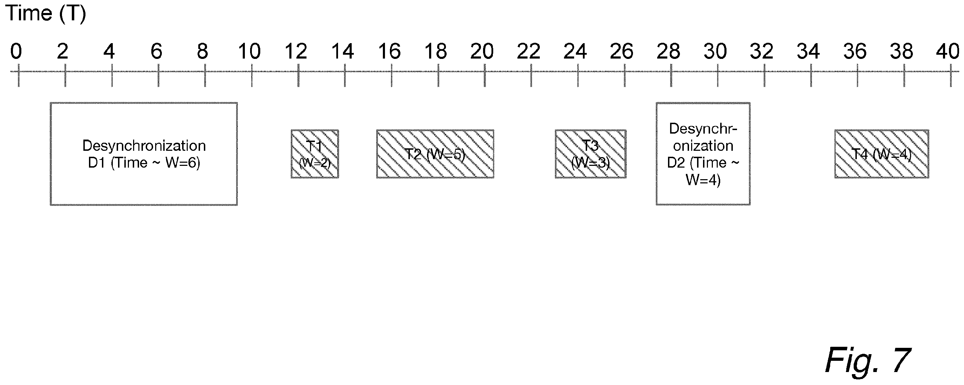

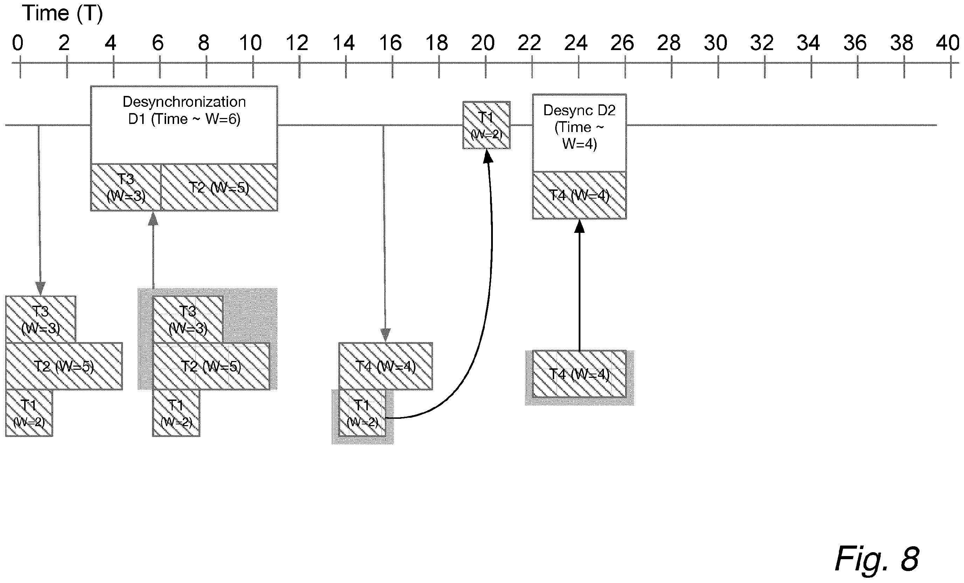

Turning now to an example of the hereinabove described technology. FIG. 7 illustrates a conventional desynchronization mechanism as part of countermeasures against attacks on digital security devices. In addition to unillustrated computation (illustrated as empty space between blocks), the example execution consists of six tasks that are executed serially; two desynchronization tasks D1 and D2, and four tasks T1, T2, T3, and T4. While, as seen in the example of FIG. 8, tasks T1 - T4 may be performed asynchronously with respect to other computations performed. However, that property is not exploited in the example of FIG. 7. The execution starts with desynchronization task D1 approximately at time = 0 and ends with task T4 at time = 28. The desynchronization blocks perform dummy calculations. Thus, the desynchronization blocks D1 and D2 produce no useful computations and do not contribute to the result of the application being executed.

Contrast now the flow of FIG. 8, which employs the asynchronous execution techniques described hereinabove, to the example of FIG. 7. An initial determination is made that tasks T1 (of weight W=2), T2 (of weight W=5), and T3 (of weight W=2) are placed on the asynchronous task queue.

At time T=3, the first desynchronization block (D1) is executed. However, in contrast to the mechanism of FIG. 7, tasks from the asynchronous task queue with a combined predicted execution time to the desired desynchronization time are selected. The desired desynchronization time for D1 is equivalent to a weight of 6. Thus, two blocks with weights adding to an equivalent to the execution time of a weight of 6 are randomly selected from the asynchronous task queue: in the example, tasks T3 (W=3) and T2 (W=5). Note that this is not strictly linear. A weight of 3 (3msec ≤ PET < 6msec) and one task with weight 5 (9msec ≤ PET < 20msec) is equivalent to a weight of 6 (20 msec ≤ PET < 50 msec).

After desynchronization, the executed tasks are removed. In the course of continued execution of the application, a new task, T4, is forecasted to be required. T4 is, therefore, added to the asynchronous task queue.

While not yet executed through a desynchronization process, task T1 is determined to be required for the execution of the application. It is therefore executed (at time T=19 and removed from the asynchronous task queue. At time T=22, the second desynchronization is performed. This time, the desynchronization time is equivalent to weight W=4. Therefore, a task is randomly selected from the asynchronous task queue that has a weight equal to four; in the example, T with a weight of W=4, and it is removed from the asynchronous task queue.

As can be observed from the example illustrated in FIGs. 7 and 8, the mechanism of using tasks that are required by the application (or by the operating system) and that can be asynchronously executed to perform desynchronization operations improves performance of the execution of the application by the digital security device. Furthermore, such execution of operations that are not merely designed to delay execution, e.g., dummy routines, are more difficult for an attacker to detect by performing timing analysis of the application as it executes on a digital security device thereby rendering the digital security device more secure in its objective of storing sensitive information and performing sensitive operations.

From the foregoing it will be apparent that an efficient and secure mechanism for improving desynchronization operations on a digital security device is provided.

Although specific embodiments of the invention have been described and illustrated, the invention is not to be limited to the specific forms or arrangements of parts so described and illustrated. The invention is limited only by the claims.

## Claims

1. A method for enhancing performance while protecting a computerized digital security device (103) against side-channel, fault injection, and timing attacks, the method comprising:
identifying (401) asynchronous tasks to be performed by the computerized digital security device;
placing (411) identified asynchronous tasks in an asynchronous task queue (317); and
executing (407) a first application, including:
nonlinearizing execution of the application by performing the steps:
selecting at least one task from the asynchronous task queue;
executing (423) the selected at least one task;
removing (425) the selected at least one task from the asynchronous task queue.

2. The method for enhancing performance while protecting a computerized digital security device against side-channel, fault injection, and timing attacks of claim 1, further comprising:
predicting (403) execution time for each identified asynchronous task; and
wherein the step of selecting at least one task from the asynchronous task queue comprises basing the selection of the at least one task from the asynchronous task queue on the predicted execution times of tasks in the asynchronous task queue.

3. The method for enhancing performance while protecting a computerized digital security device against side-channel, fault injection, and timing attacks of claim 2, comprising:
identifying an execution location at which to add desynchronization time;
determining (415) how much desynchronization time to add;
wherein the step of selecting at least one task comprises selecting (419) at least one task such that the predicted execution time of the selected at least one task sums to less than the determined desynchronization time to add; and
performing (419) at least one dummy task to equal the difference in execution time between the determined desynchronization time to add and the sum of the predicted execution time of the selected at least one task.

4. The method for enhancing performance while protecting a computerized digital security device against side-channel, fault injection, and timing attacks of claim 1, comprising shuffling execution of the first application by selecting at least one task from the asynchronous task queue and executing the selected at least one task prior to continuing execution of the first application.

5. The method for enhancing performance while protecting a computerized digital security device against side-channel, fault injection, and timing attacks of claim 1, comprising desynchronizing execution of the first application by modifying execution flow of the first application by selecting at least one task from the asynchronous task queue and executing the selected task prior to continuing execution of the first application.

6. The method for enhancing performance while protecting a computerized digital security device against side-channel, fault injection, and timing attacks of claim 1, comprising:
identifying at least a first and a second code branch wherein execution time for the first and second code branch are unequal; and
equalizing the execution time for the first and second code branch by selecting at least one task from the asynchronous task queue so that the predicted execution time of the selected at least one task balances the execution time of both code branches.

7. The method for enhancing performance while protecting a computerized digital security device against side-channel, fault injection, and timing attacks of claim 1, wherein tasks are randomly selected from the asynchronous task queue.

8. The method for enhancing performance while protecting a computerized digital security device against side-channel, fault injection, and timing attacks of claim 1, wherein tasks added to the asynchronous task queue include tasks selected from tasks required by the first application, tasks required by an operating system of the computerized digital security device, and tasks required by applications other than the first application.

9. The method for enhancing performance while protecting a computerized digital security device against side-channel, fault injection, and timing attacks of claim 1 wherein tasks added to the asynchronous task queue include tasks selected from the group computation of a very large prime number, defragmentation of memory, non-volatile memory (NVM) page refresh, NVM erase, NVM write, generation of a small buffer of random numbers using hardware true random number generation, security sensor check, memory integrity verification, code execution flow control, data compression, and data decompression.

10. A digital security device having improved performance while protected against side-channel, fault injection, and timing attacks, comprising:
a processor; and
a memory connected to the processor, the memory including instructions executable by the processor, including instructions for nonlinearizing execution of a first application by causing the processor to:
identify asynchronous tasks to be performed by the computerized digital security device;
place identified asynchronous tasks in an asynchronous task queue; and
execute a first application, performing the steps:
selecting at least one task from the asynchronous task queue;
executing the selected at least one task;
removing the selected at least one task from the asynchronous task queue.

11. The digital security device having improved performance while protected against side-channel, fault injection, and timing attacks, of claim 10 and that is programmed to perform the method of any one of claims 2 to 9.

12. A non-transitory memory comprising instructions to cause a processor of a digital security device to perform a method for enhancing performance while protecting a computerized digital security device against side-channel, fault injection, and timing attacks, including instructions for nonlinearizing execution of a first application by causing a processor to:
identify asynchronous tasks to be performed by the computerized digital security device;
place identified asynchronous tasks in an asynchronous task queue; and
execute a first application, performing the steps:
selecting at least one task from the asynchronous task queue;
executing the selected at least one task;
removing the selected at least one task from the asynchronous task queue.

13. The non-transitory memory of claim 12 comprising instructions to cause the processor of the digital security device to perform the method of any one of claims 2 to 9.
